(19) **Europäisches Patentamt**
**European Patent Office**
**Office européen des brevets**

(11) **EP 2 665 038 B1**

(12) **FASCICULE DE BREVET EUROPEEN**

(45) Date de publication et mention
de la délivrance du brevet:
**25.12.2019 Bulletin 2019/52**

(51) Int Cl.:
***G06T 7/00*** (2017.01)

(21) Numéro de dépôt: **13167707.2**

(22) Date de dépôt: **14.05.2013**

(54) **Procédé de production d'image**

Bilderzeugungsverfahren

Image production method

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.05.2012 FR 1254363**

(43) Date de publication de la demande:
**20.11.2013 Bulletin 2013/47**

(73) Titulaire: **Purchease**
**94110 Arcueil (FR)**

(72) Inventeurs:
• **Galabru, Ludovic**
**75015 Paris (FR)**
• **Mollard, David**
**75004 Paris (FR)**
• **Thurin, Gregory**
**94370 Sucy en Brie (FR)**

(74) Mandataire: **Lebkiri, Alexandre**
**Cabinet Camus Lebkiri**
**25, Rue de Maubeuge**
**75009 Paris (FR)**

(56) Documents cités:
US-A1- 2009 067 729     US-A1- 2011 091 092
US-A1- 2011 170 740     US-B2- 7 953 268

• **KOUROGI M ET AL: "REAL-TIME IMAGE
MOSAICING FROM A VIDEO SEQUENCE",
PROCEEDINGS 1999 INTERNATIONAL
CONFERENCE ON IMAGE PROCESSING.
ICIP'99. KOBE, JAPAN, OCT. 24 - 28, 1999;
[INTERNATIONAL CONFERENCE ON IMAGE
PROCESSING], LOS ALAMITOS, CA : IEEE, US,
24 octobre 1999 (1999-10-24), pages 133-137,
XP000895513, DOI: 10.1109/ICIP.1999.819564
ISBN: 978-0-7803-5468-5**
• **MARZOTTO R ET AL: "High resolution video
mosaicing with global alignment",
PROCEEDINGS OF THE 2004 IEEE COMPUTER
SOCIETY CONFERENCE ON COMPUTER VISION
AND PATTERN RECOGNITION 27 JUNE-2 JULY
2004 WASHINGTON, DC, USA, IEEE,
PROCEEDINGS OF THE 2004 IEEE COMPUTER
SOCIETY CONFERENCE ON COMPUTER VISION
AND PATTERN RECOGNITION IEE, vol. 1, 27 juin
2004 (2004-06-27), pages 692-698, XP010708627,
DOI: 10.1109/CVPR.2004.1315099 ISBN:
978-0-7695-2158-9**
• **SZELISKI RICHARD: "Image Alignment and
Stitching: A tutorial", INTERNET CITATION, 10
décembre 2006 (2006-12-10), pages I-II,
XP002521144, Extrait de l'Internet:
URL:http://pages.cs.wisc.edu/~dyer/ai-qual
/szeliski-tr06.pdf [extrait le 2009-03-20]**
• **ZITOVA B ET AL: "IMAGE REGISTRATION
METHODS: A SURVEY", IMAGE AND VISION
COMPUTING, ELSEVIER, GUILDFORD, GB, vol.
21, no. 11, 2003, pages 977-1000, XP002522120,
ISSN: 0262-8856, DOI:
10.1016/S0262-8856(03)00137-9 [extrait le
2003-08-27]**

**Description**

L'invention a pour objet un procédé de production d'image.

Le domaine de l'invention est celui de l'acquisition d'image.

Plus précisément le domaine de l'invention est celui de l'acquisition d'image sous-contrainte.

Il est de plus en plus fréquent que l'on souhaite automatiser des traitements afin d'accélérer des procédures, tout simplement de les rendre possibles ou adaptées à un traitement en masse.

Un des principaux obstacles à ces automatisations est l'acquisition de l'information à traiter. Cette information existe sous une forme « analogique ». Pour permettre le traitement automatique il faut donc numériser cette information. Des exemples de telles réalisations sont :

- les radars routiers automatiques,
- les systèmes de reconnaissance de chèques,
- la reconnaissance des codes postaux sur les courriers non électroniques,

Dans tous les exemples cités il y a acquisition d'une image qui est traitée pour extraire l'information requise par le traitement. Dans tous les exemples cités les conditions d'acquisition de l'image sont calibrées et maintenues par le dispositif d'acquisition qui a été conçu spécialement pour cette acquisition. Même ainsi dans tous les exemples cités il y a des rejets, c'est-à-dire des cas qui ne peuvent être traités par une machine.

Un autre exemple qui requerrait un traitement automatique est la production et/ou le traitement de preuves d'achats. Ce cas est celui du titulaire d'une marque commerciale qui souhaite pourvoir fidéliser ses consommateurs. Le consommateur d'une marque est le client d'un magasin qui distribue la marque.

Dans ce cas la solution retenue est donc de demander aux clients de produire une preuve d'achat et d'envoyer cette preuve au titulaire de la marque ou à un prestataire désigné par le titulaire de la marque. Cette preuve est en générale une photo du ticket délivré par le magasin dans lequel l'achat a été réalisé. Il est en général demandé de mettre en évidence la ligne correspondant au produit de la marque objet de l'offre de fidélisation. Cette mise en évidence est matérialisée par le fait d'entourer au stylo ladite ligne. Cette façon de faire, photo et mise en évidence, pose plusieurs problèmes :

- précision de la mise en évidence qui peut à l'extrême se superposer au moins partiellement à la ligne à mettre en évidence,
- s'il y a plusieurs produits sur le même ticket pour différentes marques appartenant à différents titulaires,
- qualité de la photo prise qui peut ne pas permettre un traitement automatique.

Pour l'une ou plusieurs des raisons énoncées ci-dessus, les solutions utilisées pour la validation des preuves d'achats ont fini par être basées sur l'utilisation de ressources humaines qui ont été jugées les plus aptes à traiter les preuves d'achats produites. Le résultat objectif de cet état de l'art est que chaque ticket est considéré comme une preuve d'achat pour un unique article d'une unique marque.

On remarque qu'un problème similaire se pose à un individu qui voudrait suivre précisément, via un logiciel tableur par exemple, son budget ménager. Il devrait saisir le contenu du ticket.

Le problème peut être réduit à un problème de dé<matérialisation fiable d'un document, dans le dernier exemple le document est un ticket de caisse. Une fois le document dématérialisé correctement, tous les traitements par automate, duplications, sauvegardes, analyses deviennent possibles. Ici fiable signifie adaptée au traitement automatique envisagé.

Le document US 2011/091092 intitulé « Systems for mobile image capture and remittance processing » est connu de l'état de la technique.

L'invention résout ces problèmes en proposant un procédé de production d'image assisté qui permet de garantir à un système de traitement déporté l'obtention d'une image dont les caractéristiques permettent d'atteindre un niveau minimum d'extraction de données. Ce niveau minimum permet de garantir la réussite du traitement. L'invention permet de produire une version dématérialisée fiable d'un document.

Les étapes du procédé selon l'invention sont mises en œuvre, par exemple, par un dispositif de type téléphone intelligent. Cela permet de ne pas avoir à déployer des moyens physiques dédiés tout en envisageant un très grand nombre d'utilisateurs.
L'invention permet d'analyser en temps réel un flux vidéo et de suggérer des manipulations dont la mise en œuvre améliorerait les propriétés d'une image acquise par le dispositif mettant en œuvre le procédé selon l'invention. Les propriétés sont évaluées en temps réel et, si le résultat de l'évaluation reste satisfaisant suffisamment longtemps, une image est enregistrée automatiquement. Les propriétés de cette image enregistrée sont alors telles que ladite image est adaptée pour un traitement automatisée.

L'invention a donc pour objet un procédé de production d'une première image caractérisé en ce qu'il comporte au moins les étapes suivantes :

- Acquisition d'un flux d'images,
- Pour chaque deuxième image d'une séquence datée d'images extraite du flux d'images en basse définition,

  - Calcul d'au moins un score d'image pour la deuxième image, par composition d'au moins deux scores de base eux-mêmes calculés,
  - Mémorisation du score d'image,

- Evaluation du temps pendant lequel le score d'image reste continument au-dessus d'un seuil prédéterminé,
- Comparaison du temps pendant lequel le score d'image reste continument au-dessus du seuil prédéterminé à une durée prédéterminée,

  - Si le temps pendant lequel le score d'image reste continument au-dessus du seuil prédéterminé est supérieur à la durée prédéterminé :

    - enregistrement automatique de la première image correspondant au dernier score calculé,
    - arrêt de l'acquisition du flux d'images,

  - Sinon production d'au moins une commande d'amélioration du score en fonction des scores de base.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :

- le calcul du score d'image comporte une étape d'évaluation géométrique de l'image, l'étape d'évaluation géométrique comportant les étapes suivantes :

  - Détection d'une forme géométrique dominante dans l'image,
  - Calcul d'au moins un score géométrique de base,

- au moins un score géométrique de base est parmi au moins les scores géométriques de base suivant :

  - score de base de rotation,
  - score de base de perspective,
  - score de base d'occupation.

- la forme géométrique dominante a des caractéristiques de formes attendues.
- procédé selon l'une au moins des revendications précédentes caractérisé en ce que le calcul du score d'images comporte une étape d'évaluation qualitative de l'image, l'étape d'évaluation qualitative comportant les étapes suivantes :

  - Calcul d'au moins un score qualitatif de base.

- un score qualitatif de base est parmi au moins les scores qualitatifs de base suivant :

  - Calcul d'un score de base de luminosité,
  - Calcul d'un score de base d'ombre,
  - Calcul d'un score de base de flou,
  - Calcul d'un score de base de netteté.

- au moins une commande d'amélioration du score est produite en fonction d'une mesure externe à l'image servant à calculer les scores de bases.
- une commande d'amélioration est interprétée de manière à modifier les conditions d'acquisition du flux d'image selon l'un au moins des facteurs suivants :

  - positionnement d'un dispositif mettant en œuvre le procédé selon l'invention,
  - mode d'éclairage de la scène faisant l'objet de l'acquisition du flux d'image.

- au moins une commande d'amélioration du score est convertie en un message à destination d'un opérateur utilisant un dispositif mettant en œuvre le procédé de production d'image.
- la séquence datées d'images correspond à l'une des séquences parmi :

  - Sélection d'une image à une période de temps prédéterminée, une image toutes les P secondes,
  - Sélection d'une image de manière régulière dans la séquence, une image toutes les N images,
  - Sélection selon une fonction prédéterminée.

- le flux d'images est en basse définition, la première image enregistrée automatiquement étant en haute définition.
- l'étape enregistrement automatique de la première image est précédée d'une étape de désactivation d'un dispositif intégré d'éclairage.

L'invention a également pour objet un produit programme d'ordinateur comportant une ou plusieurs séquences d'instructions exécutables par une unité de traitement d'information, l'exécution desdites séquences d'instructions permettant une mise en œuvre du procédé selon l'une quelconque des caractéristiques précédentes, lorsqu'il est chargé sur un ordinateur.
L'invention a également pour objet un produit terminal utilisateur mettant en œuvre un procédé selon l'une au moins des caractéristique précédente caractérisé en ce qu'il comporte au moins :

- Des moyens pour acquérir un flux d'images,
- Pour chaque image d'une séquence datée d'images du flux d'images en basse définition,

  - Des moyens pour calculer un score d'image pour l'image de la séquence, par composition d'au moins deux scores de base eux-mêmes calculés,

- Des moyens pour mémoriser le score d'image,
- Des moyens pour évaluation le temps pendant lequel le score d'image reste continument au-dessus d'un seuil prédéterminé,
- Des moyens pour comparer le temps pendant lequel le score d'image reste continument au-dessus du seuil prédéterminé à une durée prédéterminée,

- Si le temps pendant lequel le score d'image reste continument au-dessus du seuil prédéterminé est supérieur à la durée prédéterminé :

- des moyens pour enregistrer automatique d'une image correspondant au dernier score calculé,
- des moyens pour stopper l'acquisition du flux d'image,

- Des moyens pour produire au moins une commande d'amélioration du score en fonction des scores de base.

L'invention sera mieux comprise à la lecture de la description qui suit et à l'examen des figures qui l'accompagnent. Celles-ci sont présentées à titre indicatif et nullement limitatif de l'invention. Les figures montrent :

Figure 1 : un schéma de principe d'un dispositif mettant en œuvre le procédé selon l'invention.
Figure 2 : des étapes du procédé selon l'invention.
Figure 3 : des étapes d'une variante du procédé selon l'invention.

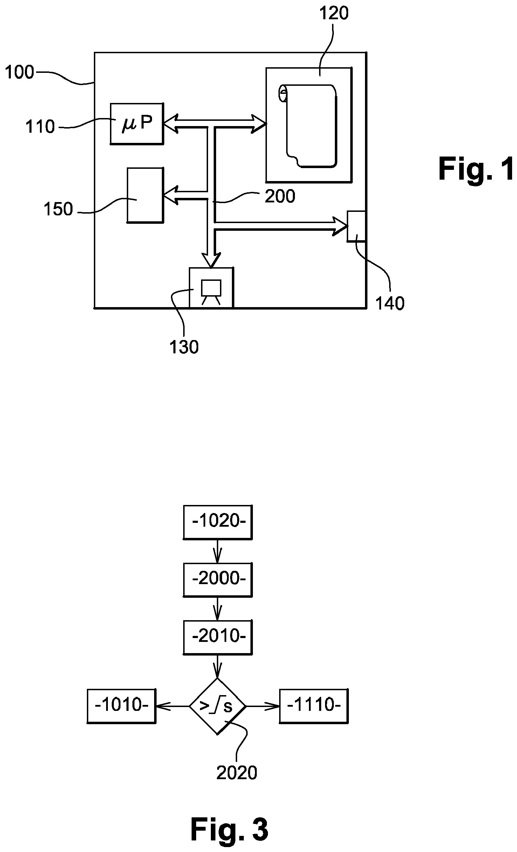

La figure 1 montre un dispositif 100 de type téléphone intelligent. Le dispositif 100 comporte au moins, et de manière non limitative :

- une unité 110 de traitements,
- une unité 120 mémoire,
- une unité 130 d'acquisition d'images,
- une unité 140 de communication,
- une unité 150 d'affichage.

L'unité 110 de traitements, l'unité 120 mémoire, l'unité 130 d'acquisition d'images, l'unité 140 de communication et l'unité 150 d'affichage sont interconnectées par un bus 200.

L'unité 140 de communication regroupe toutes les facultés de communications du dispositif 100. Cela inclut au moins les communications sans fils qu'elles soient locales (wifi,...) ou distantes (3g).

L'unité 110 de traitement est de type microprocesseur. Les étapes du procédé selon l'invention sont mises en œuvre par l'unité 110 de traitement commandée par des codes instructions enregistrés dans l'unité 120 mémoire.

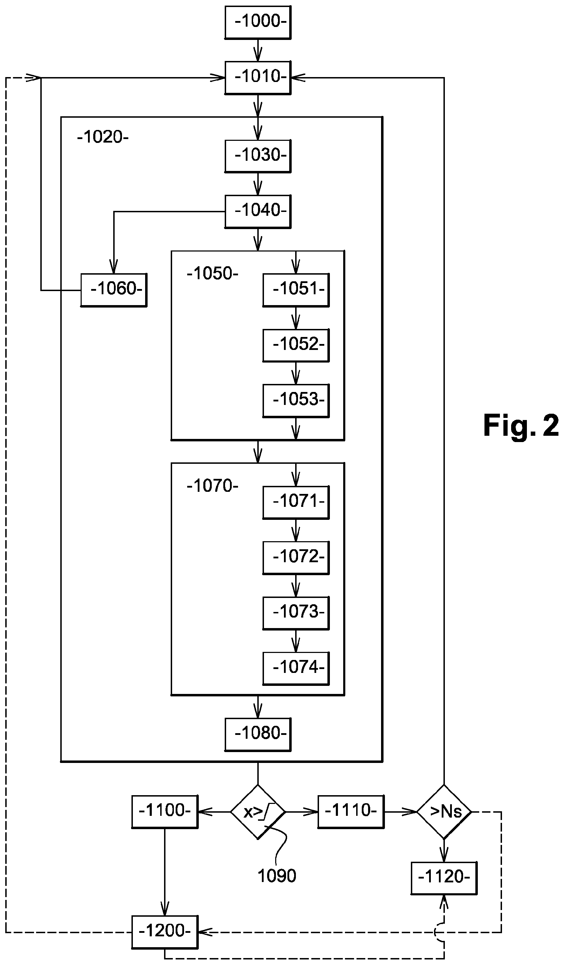

La figure 2 montre une étape 1000 préliminaire d'activation du procédé selon l'invention. Dans cette étape un utilisateur du dispositif 100 active une application mettant en œuvre le procédé selon l'invention. Cela a pour effet d'activer l'unité 130 d'acquisition d'image de telle sorte que l'unité 130 d'acquisition d'image produise un flux d'image. Dans cette variante de l'invention le flux d'image est une vidéo qui est affichée par l'unité 150 d'affichage.

Dans l'étape 1000 on initialise aussi une donnée de durée de validité dont la valeur permettra une mesure de temps. Cette donnée est par exemple, initialisée à 0 ou à la date de démarrage du procédé selon l'invention. Dans ce contexte une date est soit une date absolue précise à au moins le dixième de seconde soit un marqueur de temps de type horodateur.

De l'étape 1000 on passe à une étape 1010 de capture d'une image dans le flux d'image. Cette image capturée est une deuxième image relativement à une première image que l'on souhaite produire. Dans cette variante une image est capturée à chaque passage par l'étape 1010.

De l'étape 1010 on passe à une étape 1020 de calcul d'un score d'image. L'étape 1020 comporte elle-même une étape 1030 initiale de détection d'une forme géométrique dominante dans l'image capturée.

Dans la pratique de mise en œuvre de l'invention toute forme géométrique peut être capturée. Le suite à donner au traitement peut dépendre de la forme capturée selon qu'elle existe et/ou qu'elle correspond à une forme attendue.

Toujours la pratique on peut généraliser le terme forme en lui attribuant des propriétés par exemple de dimensions et de couleur. Ainsi il faudrait non seulement que la forme ait une certaine géométrie mais aussi une certaine surface et une certaine couleur.

Pour la description nous considérons que l'image à produire doit comporter un document contenant du texte et que ce document est de forme rectangulaire. La forme géométrique attendue est donc un rectangle, on parlera du rectangle attendu. Cela correspond, par exemple au cas où l'on souhaite produire une image d'un document comportant au moins des lignes texte. Ce sont ces lignes de texte qui doivent pouvoir être traitées automatiquement. Un tel document est, par exemple, un ticket de caisse. Ici automatiquement signifie sans intervention humaine. L'objectif de la mise en œuvre du procédé selon l'invention dans ce cas est de produire une image du document la plus exploitable possible. L'exploitation comporte ici l'extraction des lignes de texte.

Dans une variante de l'invention, on utilise, pour l'étape 1030 l'algorithme dit de partage des eaux. Pour ce faire l'image capturée et convertie, si besoin est, en une image en niveau de gris. On place alors trois marqueurs, un à gauche de l'image, un au centre de l'image et un à droite de l'image. Le résultat de l'algorithme de séparation des eaux est alors un découpage de l'image en trois zones. La zone qui a évoluée à partir du marqueur placé au centre est traitée pour en extraire le contour.

Cette extraction est réalisée, par exemple, par un algorithme de type étiquetage de composants connectés tel que celui proposé par Kenji Suzuki.

On passe de l'étape 1030 à une étape 1040 d'évaluation du contour extrait. Si le contour extrait correspond à la forme attendue, dans notre exemple un rectangle, alors on passe à une étape 1050 d'évaluation géométrique, sinon on passe à une étape 1060 de fin du calcul du score géométrique de l'image capturée.

L'étape 1040 est considérée comme une étape de calcul d'un score géométrique de base.

Dans l'étape 1060 on affecte un score géométrique bas, au sens mauvais, à l'image. En fait le score géométrique considéré comme étant suffisamment mauvais pour qu'il soit inutile de continuer. On passe de l'étape 1060 à l'étape 1010.

De manière schématique l'étape 1050 comporte elle-même autant d'étapes que de scores géométriques de base à calculer plus, de manière optionnelle, une étape d'agrégation des résultats des étapes de calcul des scores géométriques de base en un score géométrique d'image. Peu importe l'ordre dans lequel s'enchaînent les étapes de calcul des scores géométriques de base dans l'étape 1050 d'évaluation géométrique. L'ordre de la description est arbitraire.

Dans des variantes de l'invention les scores géométriques de base sont enregistrés pour être combinés, tous ou certains, avec d'autres scores de bases d'autres natures, c'est-à-dire des scores de base non géométrique. Dans une telle variante, telle celle décrite, l'étape finale d'agrégation des scores géométriques de base est facultative et peut être remplacée par une étape de production de scores agrégés calculant au moins un score en combinant un ou plusieurs scores de base d'une ou plusieurs natures. Cette remarque est également applicable pour les scores qualitatifs de base. Ces scores agrégés sont des scores d'image.

Le résultat et le traitement de l'étape 1040 permettent de déterminer deux quadrilatères :

- Un quadrilatère inscrit contenu dans le contour extrait et,
- Un quadrilatère exinscrit contenant le contour extrait.

Dans la variante décrite, ces quadrilatères sont des rectangles dont les côtés sont parallèles deux à deux. Les côtés desdits rectangles sont aussi parallèles deux à deux avec les bords de l'unité 150 d'affichage. On a donc un rectangle inscrit et un rectangle exinscrit.

Le résultat et le traitement de l'étape 1040 permettent également de déterminer les coordonnées des quatre sommets du rectangle attendu.

L'étape 1050 comporte une première étape 1051 de calcul d'un score géométrique de base de rotation. Le score géométrique de base de rotation permet de mesurer l'alignement du document avec l'unité 130 d'acquisition d'image et donc aussi avec le dispositif 150 de visualisation. Le score géométrique de base de rotation est, par exemple, le rapport entre les aires des quadrilatères inscrits et exinscrits. Un rapport de 1 indique que le contour extrait est droit. Il s'agit alors du meilleur score géométrique de base de rotation.

De l'étape 1051 on passe à une étape 1052 de calcul d'un score géométrique de base de perspective. Le score géométrique de base de perspective permet de mesurer à quel point le plan matérialisé par l'unité 150 de visualisation est parallèle au plan contenant le document dont il faut produire l'image. Le score de perspective est, par exemple, le rapport entre les longueurs des bords supérieurs et inférieur du rectangle attendu. Ces longueurs sont déduites des coordonnées des sommets dudit rectangle attendu. Dans une variante ces longueurs sont déduites des longueurs des bords supérieurs des rectangles inscrit et exinscrit. Dans ce dernier cas, on ne sait pas quelle est la longueur du bord supérieur et la longueur du bord inférieur, mais on obtient tout de même leur ratio. Le score géométrique de base de rotation est d'autant meilleur qu'il est proche de un.

De l'étape 1052 on passe à une étape 1053 de calcul d'un score géométrique de base d'occupation. Le score géométrique de base d'occupation permet de mesurer la surface occupée par le document relativement à la surface maximale qu'il pourrait occuper en prenant en compte les caractéristiques de l'image. Ce score géométrique de base d'occupation peut être lui-même décomposé en trois scores géométriques de base d'occupation :

- score géométrique de base d'occupation horizontale : défini comme le rapport entre la largeur de l'image et la largeur moyen du contour extrait.
- score géométrique de base d'occupation verticale : défini comme le rapport entre la hauteur de l'image et la hauteur moyenne du contour extrait.
- score géométrique de base d'occupation absolue : défini comme la largeur moyenne du contour extrait.

On note qu'il est possible de normaliser les scores de base et/ou d'image à une valeur par exemple à 100, ou 1. Cela est vrai pour tous les scores. Pour les scores géométriques, relativement aux exemples décrits, cela revient à les multiplier par 100. Une telle normalisation permet d'uniformiser la prise en compte des scores dans des calculs d'agrégation de scores pour la production d'indicateurs. La normalisation est une commodité, pas d'une nécessité.

De l'étape 1050 on passe à l'étape 1070 d'évaluation qualitative de l'image capturée.

De manière schématique l'étape 1070 comporte elle-même autant d'étapes que de scores qualitatifs de base à calculer plus une étape d'agrégation des résultats des étapes de calcul des scores qualitatifs de base en un score qualitatif d'image. Peu importe l'ordre dans lequel s'enchaînent les étapes de calcul des scores qualitatifs de base dans l'étape 1070 d'évaluation qualitative. L'ordre de la description est arbitraire.

L'étape 1070 dans une variante de l'invention est basée sur l'analyse du quadrilatère inscrit. On obtient ainsi la garantie que les données analysées appartiennent au document dont le contenu doit être rendu accessible pour un traitement automatisé.

L'étape 1070 comporte une étape 1071 préliminaire de division du rectangle inscrit en carrés de même surface. Le coté d'un carré est égal à la moitié de la largeur du rectangle inscrit.

Pour chaque carré ainsi obtenu on calcul, pour l'image capturée considérée en niveaux de gris :

- une image binarisée de la partie de l'image correspondant au carré par la méthode de Otsu,
- luminosité moyenne des pixels correspondant aux pixels blancs dans l'image binarisée.
- variance des niveaux de gris.

On rappelle qu'une binarisation d'une image, permettant d'obtenir une image binarisée, est le fait de sélectionner deux valeurs, par exemple 0 et 255, et d'affecter à chaque pixel de l'image une de ces valeurs. L'image est alors dite binaire car elle ne comporte que deux valeurs possibles pour les pixels qui la composent.

Dans l'étape 1071, pour l'image considérée en niveau de gris, on détecte aussi, par exemple en utilisant l'algorithme de Canny pour la détection des bords, les bords présents dans l'image. Toujours pour l'image considérée en niveau de gris on mémorise la position des minima locaux et maxima locaux d'intensité. Un maximum local est un pixel dont tous les voisins ont une intensité inférieure ou égale à la sienne. Un minimum local est un pixel dont tous les voisins ont une intensité supérieure ou égale à la sienne. Dans une variante ces maxima et minima ne sont évalués et mémorisés qu'aux voisinages des bords détectés. Un voisinage est constitué par tous les pixels situés à moins de D pixels de distance d'un bord.

De l'étape 1071 on passe à une étape 1072 de calcul d'un score qualitatif de base de luminosité. Le score qualitatif de base de luminosité est, par exemple, la moyenne des luminosités moyennes calculées à l'étape 1071.

De l'étape 1072 on passe à une étape 1073 de calcul d'un score qualitatif de base d'ombre. Le score qualitatif de base d'ombre est, par exemple, calculé par la formule suivante :

$$(1 - (max - min) / max) * 100.$$

Où :

- max : est le maximum des luminosités moyennes calculées à l'étape 1071,
- min : est le minimum des luminosités moyennes calculées à l'étape 1071.

De l'étape 1073 on passe à une étape 1074 de calcul d'un score qualitatif de base de flou. Le score qualitatif de base de flou permet de mesurer le flou de l'image capturée. Le score qualitatif de base de flou est, par exemple, calculé comme suit :

- pour chaque voisinage de bord mesure de la distance, sur l'axe des abscisses, entre le minimum d'intensité le plus proche du bord et le maximum d'intensité le plus proche du bord,
- calcul de la moyenne des distances mesurées.

Le score qualitatif de base de flou est alors la moyenne calculée.

De l'étape 1073 on passe à une étape 1074 de calcul d'un score qualitatif de base de netteté. Le score qualitatif de base de netteté permet de mesurer la netteté de l'image capturée. Le score qualitatif de base de netteté est, par exemple, le minimum des variances calculé à l'étape 1071.

L'étape 1070 est suivie d'une étape 1080 de calcul d'un score d'image. Ce score d'image est l'agrégation de tout ou partie des scores de base calculés aux étapes précédentes.

Un exemple de calcul pour l'étape 1080 est le suivant :

- pour chaque score de base on mémorise un seuil
- pour chaque score de base on effectue une comparaison relativement au seuil associé,
- pour chaque comparaison pour laquelle le score est supérieur on attribue une valeur 1, sinon on attribue une valeur 0.

On obtient ainsi un score d'image dont le maximum possible correspond au nombre de score de base calculé.

Dans des variantes il est possible de pondérer chaque score en fonction de l'impact de la propriété qu'il évalue sur le traitement auquel doit être soumis l'image à produire. Le score est alors le résultat de la des scores de bases pondérés. Il est aussi possible de produire plusieurs scores d'image combinant différemment différents scores de base.

On passe de l'étape 1080 à une étape 1090 d'évaluation du score d'image. Cette évaluation est, par exemple, la confrontation à un seuil de score d'image prédéterminé.

Ce seuil de score d'image est paramétrable et enregistré dans une zone mémoire, non représentée, du dispositif 100. Il en est de même pour les seuils associés à chaque score de base. On obtient ainsi un procédé hautement paramétrable. Les zones mémoires servant à l'enregistrement des paramètres sont persistantes de manière à préserver les paramètres d'une utilisation du procédé à l'utilisation suivante. Les zones mémoire persistantes préservent les dernières valeurs qui y ont été enregistrées.

On note ici qu'un seuil bien que prédéterminé peut varier d'un dispositif de mise en œuvre à l'autre en fonction de caractéristiques du dispositif de mise en œuvre. Cela est vrai si l'on souhaite travailler en valeurs de score normalisées. Ainsi, par exemple, si l'on souhaite pour un score qu'une dimension du document dans l'image ait une dimension minimale relative à la dimension de l'image, alors il faut que le seuil soit lui aussi relatif à la dimension de l'image. Par exemple si l'image à une résolution horizontale de 1000 pixels, si pour un score on souhaite qu'une largeur soit au minimum de 250 pixels, alors dans ce contexte le seuil normalisé à 100 (100 correspondant à la largeur de l'image) sera de 25. Avec la même contrainte mais dans une image ayant une résolution horizontale de 2000, le seuil sera de 12,5. Un tel seuil variable est déterminé, par exemple, avant le démarrage des calculs de score en fonction des caractéristiques du dispositif 100. Il s'agit donc bien d'un seuil prédéterminé.

Si le score d'image est supérieur au seuil de score d'image alors on passe à une étape 1110 d'évaluation du temps pendant lequel le score d'image est resté au-dessus du seuil de score d'image. Sinon on passe à une étape 1100 de production d'au moins une commande d'amélioration du score d'image.

Dans l'étape 1110 on traite la donnée de durée de validité. Nous considérons pour la variante décrite que la donnée de validité est un entier, et que l'on capture et analyse N images capturées par seconde.

Dans l'étape 1110 on augmente la donnée de durée de validité de 1. Si la donnée résultante est supérieure à un seuil équivalent à Ns secondes alors on passe à une étape 1120 de production d'image. Sinon on passe à l'étape 1010. Dans notre exemple, si on considère que le score d'image doit rester bon pendant 2,5 secondes, alors il faut que Ns soit égale à 25. Ns est un paramètre enregistré dans une zone mémoire du dispositif 100. Le fait de réaliser cette étape revient à mémoriser que le score d'image est bon donc revient à mémoriser le score d'image.

Dans une variante dans laquelle la donnée durée de validité est une date, l'évaluation du temps écoulé se fait en calculant la différence entre la date courante et la valeur de la donnée durée de validité.

Dans l'étape 1120 Le dispositif 100 produit automatiquement la première image. La première image est, dans la pratique, un fichier comportant des données correspondant à une image. Ledit fichier comportant des données d'image est enregistré dans une mémoire du dispositif mettant en œuvre le procédé. En général les dispositifs du type du dispositif 100 sont capables d'enregistrer des vidéos et des images fixes, c'est-à-dire des photos. Cependant c'est deux types de données, vidéo et images fixes, ne sont pas produit à la même résolution. C'est pour cela que le procédé selon l'invention ne se contente pas de sauvegarder la dernière image analysée mais déclenche, sur le dispositif 100, le processus de production d'une image fixe. Ce processus est désigné comme une prise de photo. Une différence significative entre la vidéo est la photo est que pour la vidéo le dispositif 100 n'utilise pas toute la résolution du capteur d'image de l'unité 130 d'acquisition d'image. La photo est quant à elle produite au maximum de la résolution du capteur de l'unité 130 d'acquisition d'image.

Le fait que la production de la première image soit automatique permet au moins deux choses :

- limiter un éventuel bougé due au déclenchement de la prise de vue par l'utilisateur
- garantir le moment de la prise de vue à la fin de la période minimale de maintien du score.

Si le dispositif permet de régler la résolution des photos produites, alors on utilise, indépendamment des paramétrages utilisateurs liés à l'utilisation de l'unité 130 d'acquisition d'image par le dispositif 100 :

- soit la résolution maximale possible,
- soit la résolution fixée par des paramètres spécifiques au procédé selon l'invention.

L'image produite à l'étape 1120 est enregistrée dans une zone mémoire du dispositif 100 et/ou envoyée à un serveur de traitement via l'unité 140 de communication.

Dans une variante de l'invention l'image produite à l'étape 1120 est montrée à l'utilisateur du dispositif 100 de manière à lui laisser le choix de la sauvegarde et/ou émission de l'image produite.

L'étape 1120 est aussi l'étape de fin du procédé selon l'invention.

Dans une autre variante de l'invention, non exclusive des autres variantes, l'utilisateur du dispositif 100 est averti que la production imminente de l'image, par l'affichage d'un message via l'unité 150 d'affichage. La teneur de ce message est : ne bougez plus, prise de vue imminente.

Dans l'étape 1110 il n'y a pas de raison d'améliorer le score. Il faut cependant maintenir le score. Dans ce cas, dans une variante on produit une commande d'amélioration du score qui est en fait une commande de maintien du score.

Une commande d'amélioration est en fait un message numérique comportant au moins un code d'amélioration.

Une commande d'amélioration une fois produite est émise, par exemple par l'unité 140 de communication. Il est aussi possible de réaliser une communication interprocessus.

Dans une variante de l'invention ces commandes d'améliorations sont interprétées par un processus interpréteur exécuté par le dispositif 100 lui-même. On a alors une communication interprocessus. Le résultat de cette interprétation est une modification de l'affichage de l'unité 140 d'affichage. Dans un mode de réalisation le processus interpréteur est le même processus que celui mettant en œuvre l'invention. Les étapes de ces processus s'exécutent alors séquentiellement. Dans ce dernier cas, la commande d'amélioration est complétée par une instruction de branchement pour indiquer à quelle étape le procédé de production d'image doit reprendre après l'interprétation des messages d'amélioration.

Dans l'étape 1100 on utilise les scores de base pour produire au moins un message d'amélioration. Dans la variante la plus simple il n'y a que deux messages possibles : OK ou KO. Dans ce cas l'amélioration à envisager par le destinataire du message est qu'il faut modifier les conditions de productions d'images. Ces conditions incluent, de manière non limitative :

- orientations horizontales et verticales du dispositif 100 par rapport au document
- distance du dispositif 100 par rapport au document,
- éclairage du document,
- alignement du document et du dispositif 100.

Dans ce cas, et considérant que dans la variante décrite l'étape 1100 n'est exécutée qu'en cas de score d'image insuffisant, la commande produite à l'étape 1100 comportera un code CKO signifiant que le score est globalement insuffisant et que l'étape suivante à exécuter est l'étape 1010.

De l'étape 1100 on passe à une étape 1200 d'interprétation des commandes d'amélioration. Dans cette étape on convertit les commandes d'amélioration en messages à destination d'un utilisateur du dispositif 100. A la fin de l'interprétation on passe à l'étape désignée par les commandes d'améliorations comme étant l'étape suivante. S'il y a plusieurs messages désignant des étapes différentes, alors on utilise l'étape désignée par le premier message traité comme étant l'étape suivante.

Dans une variante de l'invention on passe de l'étape 1110 à l'étape 1200 avec une commande d'amélioration dont le code correspond à un maintien du score et une étape suivante dépendant de durée pendant laquelle le score d'image est resté au-dessus du seuil de score d'image prédéterminé c'est-à-dire soit l'étape 1120; soit l'étape 1010.

Dans une variante de l'invention, à l'étape 1200, on incruste dans le flux d'image, dans une zone prédéterminée, une information colorée éventuellement associée à un pictogramme. Il s'agit d'un affichage symbolique. Cette zone prédéterminée est exclue de l'analyse visant à établir un score d'image. Cette information colorée est, par exemple un cercle. Ce cercle est alors rouge si score est insuffisant, code CKO, et vert si le score est satisfaisant, code COK. La couleur du cercle varie donc selon le code de la commande d'amélioration. Dans nos exemples nous utilisons des cercles, mais il est entendu que toute autre forme ferait l'affaire.

On note ici que l'étape 1200 peut être vue, et réalisée, comme une fonction d'affichage d'une commande d'amélioration. Une telle fonction prend comme paramètre un code d'une commande d'amélioration. En effet les mécanismes d'appel d'une fonction garantissent qu'à la fin de la fonction l'exécution reprend juste après le point d'appel de la fonction. Il n'y donc pas besoin dans ce cas que le message numérique correspondant à une commande d'amélioration comporte d'identifiant d'étape suivante, puisque le contrôle d'exécution est rendu à l'étape appelant la fonction d'affichage à la fin de l'exécution de la fonction d'affichage. Autrement dit, la fonction d'affichage peut être une extension de la production de commande d'amélioration. Une autre extension possible, et cumulable, est l'émission, via l'unité 140 de communication. Le destinataire de cette émission est alors n'importe quel dispositif rendu apte à traiter de telles commandes.

Dans une variante à trois indicateurs de l'invention, l'étape 1020 est suivie d'une étape 2000, au lieu de l'étape 1090. L'étape 2000 produit plusieurs commandes d'amélioration, par exemple trois, chacune correspondant à un type d'indicateur. Dans cet exemple les types sont nommés :

- indicateur 1 : géométrie
- indicateur 2 : atmosphère, et
- indicateur 3 : piqué.

Le code des commandes d'amélioration est alors structuré en deux parties : une première partie type, et une deuxième partie état. Les états sont au nombre de trois : KO pour non valable, NOK pour acceptable à la limite, OK pour conforme. Il y a donc 9 codes possibles : 3 types * 3 états.

Pour chaque type l'état est calculé en fonction des scores de bases.

De l'étape 2000 on passe à une étape 2010 de traitement des commandes d'améliorations comme précédemment décrit pour l'étape 1200. A chaque type correspond un cercle et un pictogramme. La couleur du cercle est déterminée par l'état, avec par exemple les couleurs suivantes :

- KO : rouge
- NOK : orange
- OK : vert.

De l'étape 2010 on passe une étape 2020 équivalente à l'étape 1090. Dans l'étape on décide, par exemple, que le score d'image est satisfaisant si au moins deux des commandes d'amélioration ont un état OK quand l'autre a un état NOK. On pourrait utiliser une autre règle. Si le score d'image est satisfaisant on passe à l'étape 1110, sinon on passe à l'étape 1010. Dans cette variante l'étape 1110 est considérée sans gestion de commande d'amélioration.

On a illustré ici que le calcul d'un score d'image pouvait se faire en plus de deux étapes :

- scores de bases
- états d'indicateurs à partir des scores de bases
- score d'image à partir d'états d'indicateurs.

Cependant le score d'image ainsi obtenu continu à dépendre des scores de bases et pourrait être obtenu à l'identique indépendamment de la notion d'indicateur. On illustre également que les résultats intermédiaire sont aussi exploitable en tant que score d'image car il caractérise, d'une certaine manière, l'image.

Dans cette variante à trois indicateurs, on associe à chaque indicateur deux seuils, un seuil Si1 et un seuil Si2 avec Si1 inférieur ou égal à Si2. Pour chaque indicateur i on calcul un score i.

- Si le score i est inférieur à Si1 alors l'état est KO,
- Si le score i est compris entre Si1 et Si2 alors l'état est NOK,
- Si le score i est supérieur à Si2 alors l'état est OK.

Il est tout à fait possible d'utiliser Si1 = Si2. Cela revient à ne pas utiliser l'état NOK.

Dans une variante on décide que :

- L'indicateur 1 est une combinaison de tous les scores géométriques de base décrits,
- L'indicateur 2 est une combinaison de scores qualitatifs de base de luminosité, de netteté et d'ombre,
- L'indicateur 3 est une combinaison des scores qualitatifs de base de netteté, de flou et d'un score de base de vibration issu d'une unité non représentée de mesure des vibrations.

Une unité de mesure des vibrations est typiquement composée d'un ou plusieurs gyroscopes et est connecté à l'unité 110 de traitements. Cette mesure est une mesure externe à l'image.

Dans une autre variante on décide que :

- L'indicateur 1 est une combinaison des scores géométriques de base d'occupation absolue et de perspective,
- L'indicateur 2 est une combinaison de scores qualitatifs de base de luminosité et d'ombre,
- L'indicateur 3 est une combinaison des scores qualitatifs de base de netteté et de flou.

Il est possible de construire des variantes d'au moins deux façons :

- en modifiant des formules de combinaison de scores de base,
- en modifiant les modes de calcul des scores de base.

Dans la variante à 3 indicateurs, l'utilisateur du dispositif 100 sait quelles manipulations effectuer en fonction de la couleur des cercles affichés pour chaque type de commande d'amélioration.

Dans une variante une commande d'amélioration comporte, en plus d'un code, un message décrivant la ou les manipulations à effectuer pour améliorer le ou les scores. Dans cette variante on affiche, lors du traitement des commandes d'amélioration, le texte que comporte la commande d'amélioration.

Par exemple, pour l'indicateur 1, s'il est dans un état NOK ou KO on incorpore un des messages suivants à la commande d'amélioration correspondante :

- Si le score géométrique de base de rotation est le plus mauvais des scores utilisés pour le calcul de l'état de l'indicateur : « le ticket ne doit pas être penché »,
- Si le score géométrique de base d'occupation verticale est le plus mauvais des scores utilisés pour le calcul de l'état de l'indicateur : « le ticket doit occuper le maximum d'espace vertical »,
- Si le score géométrique de base d'occupation horizontale est le plus mauvais des scores utilisés pour le calcul de l'état de l'indicateur : « le ticket est trop long »
- Si le score géométrique de base d'occupation absolue est le plus mauvais des scores utilisés pour le calcul de l'état de l'indicateur : « le dispositif ne peut pas prendre un ticket si long »
- Si le score géométrique de base de perspective est le plus mauvais des scores utilisés pour le calcul de l'état de l'indicateur : « le dispositif doit être au-dessus du ticket »

Si plusieurs scores de base sont vraiment mauvais il est possible de hiérarchiser les scores selon un ordre d'importance pour l'amélioration de l'état de l'indicateur. On incorporera alors à la commande d'amélioration le message correspondant au score le plus important.

On peut aussi associer d'autres messages à d'autres scores de base :

- vibration : « vous tremblez trop »
- flou : «le ticket est flou »
- luminosité : « l'éclairage est mauvais »
- ombre : « il y a une ombre sur le ticket »

Dans une variante dans laquelle chaque score de base serait normalisé selon 3 valeurs possibles : mauvais, moyen et bon, alors il est possible d'associer à chaque score de base un message selon la valeur du score base selon que la valeur est mauvais ou moyen.

On voit à travers ces exemples que le procédé selon l'invention permet de guider un utilisateur pour l'acquisition d'une image de qualité optimale. L'indicateur 1 géométrique incite un utilisateur à modifier le positionnement du dispositif. L'indicateur 2 d'ambiance incite l'utilisateur du dispositif à modifier les conditions d'éclairage du document. L'indicateur 3 de piqué incite l'utilisateur à moins bouger.

On voit également qu'un message produit peut être symbolique, textuel ou symbolique et textuel.

Dans la description nous avons considéré une boucle de traitement qui capture les images au fil de l'eau, c'est-à-dire à la fin d'une boucle, et donc au début de la suivante, on prend en compte l'image disponible dans le flux d'image. L'intervalle de temps entre deux images capturées dépend donc du temps de traitement d'une image capturée. Dans la mesure où les images capturées sont homogènes dans leur composition ce temps de traitement est relativement constant, en tout cas suffisamment constant pour que l'on puisse utiliser, comme décrit, le nombre d'images traitées pour calculer un temps. En ce sens les images du flux sont datées : la première image capturée correspond à une date initiale, la date des images suivantes est déduite de leur ordre dans la séquence de traitement depuis l'image initiale. Cela revient à capturer une image par temps de cycle de traitement.

Dans d'autres variantes on date la séquence d'image en stockant la date à laquelle on capture l'image.

Dans d'autre variante de l'invention on peut envisager d'autres séquences de capture d'images dans le flux d'image :

- une image toutes les 3 images,
- une image toutes les 5 images,
- une image toutes les 10 images,
- une image toutes les 50 millisecondes,
- une image toutes les 100 millisecondes,
- une image toutes les 200 millisecondes.

Ces exemples ne sont pas limitatifs. On peut aussi envisager une fonction prédéterminée dépendant d'un ou plusieurs scores de base. Par exemple s'il y a peu de vibration, on peut analyser moins d'image.

Dans une variante de l'invention, dans l'étape 1120, avant de déclencher la prise de vue on inhibe de déclenchement d'un éventuel flash. Un flash est un dispositif d'éclairage ponctuel. Cela permet de limiter des effets nuisibles dus à d'éventuelles propriétés réfléchissantes du papier utilisé pour produire le document dont on veut obtenir l'image.

**Revendications**

1. Procédé de production d'une première image **caractérisé en ce qu'**il comporte au moins les étapes suivantes :

   - Acquisition (1000) d'un flux vidéo d'images,
   - Pour chaque image d'une séquence datée d'images extraite (1010) du flux d'images en basse définition :

   ◦ Calcul (1020) d'au moins un score d'image par composition d'au moins deux scores de base eux-mêmes calculés à partir d'une évaluation géométrique et une évaluation qualitative de l'image capturée,
   ◦ Mémorisation (1110) du score d'image,

   - Evaluation (1110) du temps pendant lequel le score d'image reste continument au-dessus d'un seuil prédéterminé,
   - Comparaison (1110) du temps pendant lequel le score d'image reste continument au-dessus du seuil prédéterminé à une durée prédéterminée,

   ◦ Si le temps pendant lequel le score d'image reste continument au-dessus du seuil prédéterminé est supérieur à la durée prédéterminée :

   • enregistrement (1120) automatique de la première image correspondant au dernier score calculé,
   • arrêt de l'acquisition du flux d'images,

   ◦ Sinon production (1100) d'au moins une commande d'amélioration du score en fonction des scores de base.

2. Procédé selon la revendication 1, **caractérisé en ce que** le calcul du score d'image comporte une étape (1050) d'évaluation géométrique de l'image, l'étape d'évaluation géométrique comportant les étapes suivantes :

   - Détection d'une forme géométrique dominante dans l'image,
   - Calcul d'au moins un score géométrique de base,

3. Procédé selon la revendication 2, **caractérisé en ce que** l'au moins un score géométrique de base est parmi au moins les scores géométriques de base suivant :

   - score de base de rotation,
   - score de base de perspective,
   - score de base d'occupation.

4. Procédé selon l'une au moins des revendications précédentes, **caractérisé en ce que** la forme géométrique dominante a des caractéristiques de formes attendues.

5. Procédé selon l'une au moins des revendications précédentes **caractérisé en ce que** le calcul du score d'images comporte une étape (1070) d'évaluation qualitative de l'image, l'étape d'évaluation qualitative comportant les étapes suivantes :

- Calcul d'au moins un score qualitatif de base.

6. Procédé selon la revendication 5, **caractérisé en ce que** l'au moins un score qualitatif de base est parmi au moins les scores qualitatifs de base suivant :

- Calcul d'un score de base de luminosité,
- Calcul d'un score de base d'ombre,
- Calcul d'un score de base de flou,
- Calcul d'un score de base de netteté.

7. Procédé selon l'une au moins des revendications précédentes, **caractérisé en ce qu'**au moins une commande d'amélioration du score est produite (2000) en fonction d'une mesure externe à l'image servant à calculer les scores de bases.

8. Procédé selon l'une au moins des revendications précédentes, **caractérisé en ce qu'**une commande d'amélioration est interprétée de manière à modifier les conditions d'acquisition du flux d'image selon l'un au moins des facteurs suivants :

- positionnement d'un dispositif mettant en œuvre le procédé selon l'invention,
- mode d'éclairage de la scène faisant l'objet de l'acquisition du flux d'image.

9. Procédé selon l'une au moins des revendications précédentes **caractérisé en ce que** au moins une commande d'amélioration du score est convertie (1200) en un message à destination d'un opérateur utilisant un dispositif mettant en œuvre le procédé de production d'image.

10. Procédé selon l'une au moins des revendications précédentes, **caractérisé en ce que** la séquence datée d'images correspond à l'une des séquences parmi :

- Sélection d'une image à une période de temps prédéterminée, une image toutes les P secondes,
- Sélection d'une image de manière régulière dans la séquence, une image toutes les N images,
- Sélection selon une fonction prédéterminée.

11. Procédé selon l'une au moins des revendications précédentes **caractérisé en ce que** le flux d'images est en basse définition, la première image enregistrée automatiquement étant en haute définition.

12. Procédé selon l'une au moins des revendications précédentes **caractérisé en ce que** l'étape enregistrement automatique de la première image est précédée d'une étape de désactivation d'un dispositif intégré d'éclairage.

13. Produit programme d'ordinateur comportant une ou plusieurs séquences d'instructions exécutables par une unité de traitement d'information, l'exécution desdites séquences d'instructions permettant une mise en œuvre du procédé selon l'une quelconque des revendications précédentes 1 à 12, lorsqu'il est chargé sur un ordinateur.

14. Produit terminal utilisateur mettant en œuvre un procédé selon l'une au moins des revendications 1 à 12 **caractérisé en ce qu'**il comporte au moins :

- Des moyens pour acquérir un flux vidéo d'images,
- Pour chaque image d'une séquence datée d'images du flux d'images en basse définition,

  ◦ Des moyens pour calculer un score d'image par composition d'au moins deux scores de base eux-mêmes calculés à partir d'une évaluation géométrique et une évaluation qualitative de l'image capturée,
  ◦ Des moyens pour mémoriser le score d'image,

- Des moyens pour évaluation le temps pendant lequel le score d'image reste continument au-dessus d'un seuil prédéterminé,
- Des moyens pour comparer le temps pendant lequel le score d'image reste continument au-dessus du seuil prédéterminé à une durée prédéterminée,
  ◦ Si le temps pendant lequel le score d'image reste continument au-dessus du seuil prédéterminé est supérieur à la durée prédéterminée :

    • des moyens pour enregistrer automatique d'une image correspondant au dernier score calculé,
    • des moyens pour stopper l'acquisition du flux d'image,

- Des moyens pour produire au moins une commande d'amélioration du score en fonction des scores de base.

**Patentansprüche**

1. Produktionsverfahren eines ersten Bildes, **dadurch gekennzeichnet, dass** es wenigstens die folgenden Schritte umfasst:

- Erwerb (1000) eines Stroms von Videobildern,
- Für jedes Bild einer datierten Bildsequenz (1010), die aus dem Strom von Videobildern in niedriger Auflösung extrahiert ist;

   o Berechnung (1020) wenigstens eines Bildscores durch die Zusammensetzung von wenigstens zwei Basisscores, die ihrerseits ausgehend von einer geometrischen Beurteilung und einer qualitativen Beurteilung des erfassten Bildes berechnet sind,
   o Abspeicherung (1110) der Bildscore,

- Beurteilung (1110) der Zeit, während der der Bildscore kontinuierlich oberhalb eines vorbestimmten Schwellenwertes bleibt,
- Vergleich (1110) der Zeit, während der der Bildscore kontinuierlich oberhalb des vorbestimmten Schwellenwertes bei einer vorbestimmten Dauer bleibt,

   o wenn die Zeit, während der der Bildscore kontinuierlich oberhalb des vorbestimmten Schwellenwertes bleibt, die vorbestimmte Dauer übersteigt;

     • Automatisches Aufnehmen (1120) des ersten Bildes, das dem letzten berechneten Score entspricht,
     • Abschaltung des Erwerbs des Stroms von Bildern,

   o Andernfalls Produktion (1100) wenigstens eines Verbesserungsbefehls des Scores in Abhängigkeit von den Basisscores.

2. Verfahren gemäß Anspruch 1, **dadurch gekennzeichnet, dass** die Berechnung des Bildscores einen Schritt (1050) der geometrischen Beurteilung des Bildes umfasst, wobei der geometrische Beurteilungsschritt die folgenden Schritte umfasst:

   - Erkennen einer geometrischen Form, die in dem Bild vorherrscht,
   - Berechnung wenigstens eines geometrischen Basisscores.

3. Verfahren gemäß Anspruch 2, **dadurch gekennzeichnet, dass** der wenigstens eine geometrische Basisscore aus wenigstens den folgenden geometrischen Basisscores hervorgeht:

   - Basiscore der Drehung,
   - Basiscore der Perspektive,
   - Basiscore der Belegung.

4. Verfahren gemäß einem der voranstehenden Ansprüche, **dadurch gekennzeichnet, dass** die vorherrschende geometrische Form Merkmale von erwarteten Formen aufweist.

5. Verfahren gemäß wenigstens einem der voranstehenden Ansprüche, **dadurch gekennzeichnet, dass** die Berechnung des Bildscores einen Schritt (1070) zur qualitativen Beurteilung des Bildes umfasst, wobei der Schritt zur qualitativen Beurteilung die folgenden Schritte umfasst:

   - Berechnung wenigstens eines qualitativen Basisscores.

6. Verfahren gemäß Anspruch 5, **dadurch gekennzeichnet, dass** der wenigstens eine qualitative Basisscore aus wenigstens den folgenden qualitativen Basisscores hervorgeht:

   - Berechnung eines Basisscores der Helligkeit,
   - Berechnung eines Basisscores des Schattens,
   - Berechnung eines Basisscores der Unschärfe,
   - Berechnung eines Basisscores der Schärfe.

7. Verfahren gemäß wenigstens einem der voranstehenden Ansprüche, **dadurch gekennzeichnet, dass** wenigstens ein Verbesserungsbefehl des Scores in Abhängigkeit einer externen Messung des Bildes durchgeführt ist (2000), die zum Berechnen des Basisscores dient.

8. Verfahren gemäß wenigstens einem der voranstehenden Ansprüche, **dadurch gekennzeichnet, dass** ein Verbesserungsbefehl derart ausgewertet ist, dass die Erwerbsbedingungen des Bildstroms gemäß wenigstens einem der folgenden Faktoren abgeändert sind:

   - Positionierung einer Vorrichtung, die das Verfahren gemäß der Erfindung umsetzt;
   - Beleuchtungsmodus des Motivs, das Gegenstand des Erwerbs des Bildstroms ist.

9. Verfahren gemäß wenigstens einem der voranstehenden Ansprüche, **dadurch gekennzeichnet, dass** wenigstens ein Verbesserungsbefehl des Scores in eine an einen Operator gerichtete Meldung umgewandelt ist (1200), der eine Vorrichtung verwendet, die das Produktionsverfahren eines Bildes umsetzt.

10. Verfahren gemäß wenigstens einem der voranstehenden Ansprüche, **dadurch gekennzeichnet, dass** die datierte Bildsequenz einer der Sequenzen entspricht aus:

   - Auswahl eines Bildes zu einer vorbestimmten Zeitperiode, ein Bild alle P Sekunden,

- Regelmäßige Auswahl eines Bildes in der Sequenz, ein Bild alle N Bilder,
- Auswahl gemäß einer vorbestimmten Funktion.

11. Verfahren gemäß wenigstens einem der voranstehenden Ansprüche, **dadurch gekennzeichnet, dass** der Strom von Bildern in niedriger Auflösung ist, wobei das erste automatisch aufgenommene Bild in hoher Auflösung ist.

12. Verfahren gemäß wenigstens einem der voranstehenden Ansprüche, **dadurch gekennzeichnet, dass** dem automatischen Aufnahmeschritt des ersten Bildes ein Deaktivierungsschritt einer integrierten Beleuchtungsvorrichtung vorausgeht.

13. Computerprogrammprodukt, das eine oder mehrere Anweisungssequenzen umfasst, die von einer Einheit zur Informationsverarbeitung ausführbar sind, wobei die Ausführung der genannten Anweisungssequenzen ein Umsetzen des Verfahrens gemäß irgendeinem der voranstehenden Ansprüche 1 bis 12 erlaubt, wenn es auf einen Computer geladen ist.

14. Nutzer-Terminalprodukt, das ein Verfahren gemäß wenigstens einem der Ansprüche 1 bis 2 umsetzt, **dadurch gekennzeichnet, dass** es wenigstens umfasst:

- Mittel zum Erwerben eines Stroms von Videobildern,
- Für jedes Bild eine datierte Sequenz von Bildern des Stroms von Bildern in niedriger Auflösung

o Mittel zum Berechnen eines Bildscores durch die Zusammensetzung von wenigstens zwei Basisscores, die ihrerseits ausgehend von einer geometrischen Beurteilung und einer qualitativen Beurteilung des erfassten Bildes berechnet sind,
o Mittel zum Speichern des Bildscores,

- Mittel zum Beurteilen der Zeit, während der der Bildscore kontinuierlich oberhalb eines vorbestimmten Schwellenwertes bleibt,
- Mittel zum Vergleichen der Zeit, während der der Bildscore kontinuierlich oberhalb des auf eine vorbestimmte Dauer vorbestimmten Schwellenwertes bleibt,
o Wenn die Zeit, während der der Bildscore kontinuierlich oberhalb des vorbestimmten Schwellenwertes bleibt, die vorbestimmte Dauer übersteigt:

• Mittel zum automatischen Aufnehmen eines Bildes, das dem letzten berechneten Score entspricht,
• Mittel zum Stoppen des Erwerbs des Bildstroms,

- Mittel zum Produzieren wenigstens eines Verbesserungsbefehls des Scores in Abhängigkeit von den Basisscores.

**Claims**

1. Method for producing a first image **characterised in that** it comprises at least the following steps:

- Acquisition (1000) of a stream of video images,
- For each image of a dated sequence of images extracted (1010) from the stream of low-definition images:

o Calculation (1020) of at least one image score by composition of at least two basic scores themselves calculated from a geometrical evaluation and a qualitative evaluation of the captured image,
o Memorisation (1110) of the image score,

- Evaluation (1110) of the time during which the image score remains continuously above a preset threshold,
- Comparison (1110) of the time during which the image score remains continuously above the preset threshold at a preset duration,

o If the time during which the image score remains continuously above the preset threshold is greater than the preset duration:

• automatic recording (1120) of the first image corresponding to the last score calculated,
• stopping of the acquisition of the stream of images,

o Otherwise production (1100) of at least one command for improving the score according to the basic scores.

2. Method according to claim 1, **characterised in that** the calculation of the image score comprises a step (1050) of geometrical evaluation of the image, the step of geometrical evaluation comprising the following steps:

- Detection of a dominant geometrical form in the image,
- Calculation of at least one basic geometrical score.

**3.** Method according to claim 2, **characterised in that** the at least one geometrical basic score is among at least the following basic geometrical scores:

- basic rotation score,
- basic perspective score,
- basic occupation score.

**4.** Method according to at least one of the preceding claims, **characterised in that** the dominant geometrical form has characteristics with expected forms.

**5.** Method according to at least one of the preceding claims **characterised in that** the calculation of the image scores comprises a step (1070) of qualitative evaluation of the image, the qualitative evaluation step comprising the following steps:

- Calculation of at least one basic qualitative score.

**6.** Method according to claim 5, **characterised in that** the at least one basic qualitative score is from among at least the following basic qualitative scores:

- Calculation of a basic luminosity score,
- Calculation of a basic shadow score,
- Calculation of a basic blurry score,
- Calculation of a basic sharpness score.

**7.** Method according to at least one of the preceding claims, **characterised in that** at least one score improvement command is produced (2000) according to a measurement external to the image used to calculate the basic scores.

**8.** Method according to at least one of the preceding claims, **characterised in that** an improvement command is interpreted in such a way as to modify the acquisition conditions of the image stream according to at least one of the following factors:

- positioning of a device that implements the method according to the invention,
- method of lighting the scene object of the acquisition of the image stream.

**9.** Method according to at least one of the preceding claims **characterised in that** at least one score improvement command is converted (1200) into a message for an operator using a device that implements the method for producing an image.

**10.** Method according to at least one of the preceding claims, **characterised in that** the dated sequence of images corresponds to one of the sequences from among:

- Selection of an image at a preset period of time, one image every P seconds,
- Selection of an image in a regular way in the sequence, one image every N images,
- Selection according to a preset function.

**11.** Method according to at least one of the preceding claims **characterised in that** the stream of images is in low definition, the first image automatically recorded being in high definition.

**12.** Method according to at least one of the preceding claims **characterised in that** the step of automatic recording of the first image is preceded by a step of deactivation of a built-in lighting device.

**13.** Computer programme product comprising one or more sequences of instructions that can be executed by an information processing unit, the execution of said sequences of instructions allowing for an implementation of the method according to any of the preceding claims 1 to 12, when it is loaded on a computer.

**14.** User terminal product implementing a method according to at least one of claims 1 to 12 **characterised in that** it comprises at least:

- Means for acquiring a stream of video images,
- For each image of a dated sequence of images of the stream of low-definition images,

    o Means for calculating an image score by the composition of at least two basic scores themselves, calculated using a geometrical evaluation and a qualitative evaluation of the captured image,
    o Means for memorising the image score,

- Means for evaluation of the time during which the image score remains continuously over a preset threshold,
- Means for comparing the time during which the image score remains continuously above the preset threshold at a preset duration,
    o If the time during which the image score remains continuously above the preset threshold is greater than the preset duration:

    • means for automatically recording an image corresponding to the last score calculated,
    • means for stopping the acquisition of the image stream,

- Means for producing at least one score improvement command according to the basic scores.

**Fig. 1**

**Fig. 3**

Fig. 2

**EP 2 665 038 B1**

## RÉFÉRENCES CITÉES DANS LA DESCRIPTION

**Documents brevets cités dans la description**

- US 2011091092 A